# EUROPEAN PATENT SPECIFICATION

(11) **EP 1 969 949 B1**
(45) Date of publication and mention of the grant of the patent: **02.05.2012**
(21) Application number: 06841742.7
(22) Date of filing: 15.12.2006
(51) Int. Cl.: A23G 9/22

(54) **ROTARY MACHINE FOR FILLING CONTAINERS WITH ICE CREAM AND OTHER SUBSTANCES**
ROTATIONSMASCHINE ZUM FÜLLEN VON BEHÄLTERN MIT SPEISEEIS UND ANDEREN SUBSTANZEN
MACHINE ROTATIVE DESTINÉE AU REMPLISSAGE D'EMBALLAGES DE CREME GLACEE OU D'AUTRES SUBSTANCES

(30) Priority: 16.12.2005 ES 200503106
(43) Date of publication of application: 17.09.2008
(73) Proprietor: BIG DRUM Engineering GmbH, 34549 Edertal-Giflitz (DE)
(72) Inventor: VECIANA I MEMBRADO, Jose, Maria, E-43205 Reus (Tarragona) (ES)
(74) Representative: Carpintero Lopez, Francisco
(86) International application number: PCT/ES2006/000690
(87) International publication number: WO 2007/068777

(56) References cited:
- ES-A1- 0 341 624
- ES-A1- 2 245 562
- US-A- 3 070 933
- US-A- 3 089 614
- US-A- 3 092 944

## Description

### OBJECT OF THE INVENTION

The present invention belongs to the field of those machines which are equipped with means for dispensing containers, for the filling and topping of said containers with ice creams and other substances, and for the closing of the same.

The object of the invention is that the machine shall be of the rotary type wherein the correct positioning of the accessories of the substances to be dispensed is foreseen, likewise incorporating a design which guarantees uniform distribution of loads, preventing maladjustments, misalignments or the jamming of its moving parts.

### BACKGROUND OF THE INVENTION

A type of machine designed for the filling of containers for ice creams and similar, such as cones or tubs, is well known; here each container is supplied by a dispenser, its interior being optionally sprinkled subsequently with chocolate, whereon the addition of ice cream is immediately carried out in a filling operation and then another topping or decorating operation, followed optionally by a vibration for the dispensing of a granulated product, syrups, etc.

Subsequently, the cover is dispensed and its closure is guaranteed by means of the folding inwards of the wrapping in the case of a cone, or the dispensing under pressure of the lid, or sealing, in the case of a tub, for its subsequent removal from the machine.

This type of machine incorporates a rotary carousel whereon there is at least one circumferential row of compartments for the respective containers, distributed at equal angles; this being subjected to a sequential rotary movement in such a way that each compartment passes below a likewise circumferential array of dispensing heads, installed on a support which permits circumferential movement and attachment of the accessories.

Among these heads, the container dispenser, a chocolate sprinkler head (where necessary), an ice cream or similar substance filling head, an alternative topping head for a second stage, a dispenser of granulated substances and/or liquids where applicable, a lid dispenser and a lid dress should be highlighted; behind this there will be a radial conveyor belt for the removal of filled containers.

The aforementioned support is associated to a vertical shaft which features an alternative vertical movement provided by a cam with which it is in contact at its lower end, the cam being linked to a shaft which is operated by a motor.

The alternative vertical movement of the support determines the operative sequence and the supply from the different dispensing heads which will descend or rise, depending on the position occupied by the container as a consequence of the rotary movement of the carousel, this being synchronised with the movement of the support.

The movement of the carousel takes place due to the action of a partially toothed worm gear which engages with lugs located at the base of the carousel, and whose rotary movement determines the step-by-step movement of the containers located in compartments featured by the rotary table of the machine.

The containers for the storage of the substances to be supplied from the dispensing heads are located on different platforms situated on supports above the structure. Access, positioning and adjustment of the containers are difficult, as they have a rigid location which does not permit simple adaptation to new products.

### DESCRIPTION OF THE INVENTION

The rotary machine for the filling of ice cream containers which is the object of this invention optimises the operating conditions of the same and of the remaining elements which intervene in the dispensing of containers, the filling and topping of said containers with ice cream and other substances, with the object of guaranteeing the correct operation of the machine.

Unlike other known solutions, the use of a fixed support is proposed, on the outside of the carousel whereon the containers rotate during their processing, and whereon the accessories which take part in the supply of the different components are attached. This situation of the accessories is clearly advantageous in order to allow easy access and handling of the same, likewise a simple re-positioning for their adaptation to new products or to more complex filling.

The inclusion of a baseplate whereon the aforementioned fixed support is installed is likewise proposed. This fixed support is comprised of an external vertical cylinder wherefrom radial arms emerge; these bear vertical supports on whose upper end a horizontal crown is associated, whereon the accessories which supply the different substances and components for the preparation of the desired product are attached.

The crown is located around a carousel which features an upper disc provided with compartments wherein the containers are deposited. The position of the crown and the separation of the same from the carousel may be regulated by adjusting clamps which establish the position of the vertical supports on the radial arms of the fixed support, facilitating the conversion of the machine by means of few changes and/or modifications.

The upper disc of the carousel is mounted on an internal cylindrical body which rotates with regard to the external vertical cylinder of the fixed support, and it is associated with a lower disc which features a mechanism for its step-by-step turning movement.

The upper disc, therefore, features a movement which permits the rotation of the containers for the guided positioning of the same below dispensing heads, in combination with halts during which the containers are filled or topped by means of said heads with ice creams or other substances, and the different components which constitute the product are dispensed.

Traversing the lower and upper discs we find a vertical shaft which incorporates at its base a wheel which is in contact with a cam endowed with rotary movement and which brings about the raising and/or lowering of the vertical shaft which is linked at its upper end with a perforated platform whereon the dispensing heads, or other type of heads which require synchronised vertical movement, are arranged.

The raising or lowering of the aforementioned platform is synchronised with the rotary movement of the carousel, in such a way that when the carousel is halted, the platform descends, determining the descent and opening of the dispensing heads which will supply substances to the container located immediately below the same.

The raising operation may also be carried out by means of two pneumatic cylinders located below the lower disc, in order to halt the alternative vertical movement.

### DESCRIPTION OF THE DRAWINGS

To complement the description being made and with the aim of aiding towards a better understanding of the characteristics of the invention, in accordance with a preferred practical embodiment of the same, a set of drawings is attached as an integral part of said description, wherein the following has been portrayed for illustrative and not limitative purposes:
- Figure 1: Portrays a schematic elevational view of the characteristic elements of the rotary machine for the filling of ice cream containers;
- Figure 2: Portrays a schematic perspective view of the machine, wherein the fixed support has not been portrayed;
- Figure 3: Portrays a perspective view of the fixed support, whereon the accessories and the component dispensers are located;
- Figure 4: Portrays an elevational view of the fixed support.

### PREFERRED EMBODIMENT OF THE INVENTION

With reference to the figures, a preferred embodiment of the rotary machine for the filling of ice creams which constitutes the object of this invention is described below.

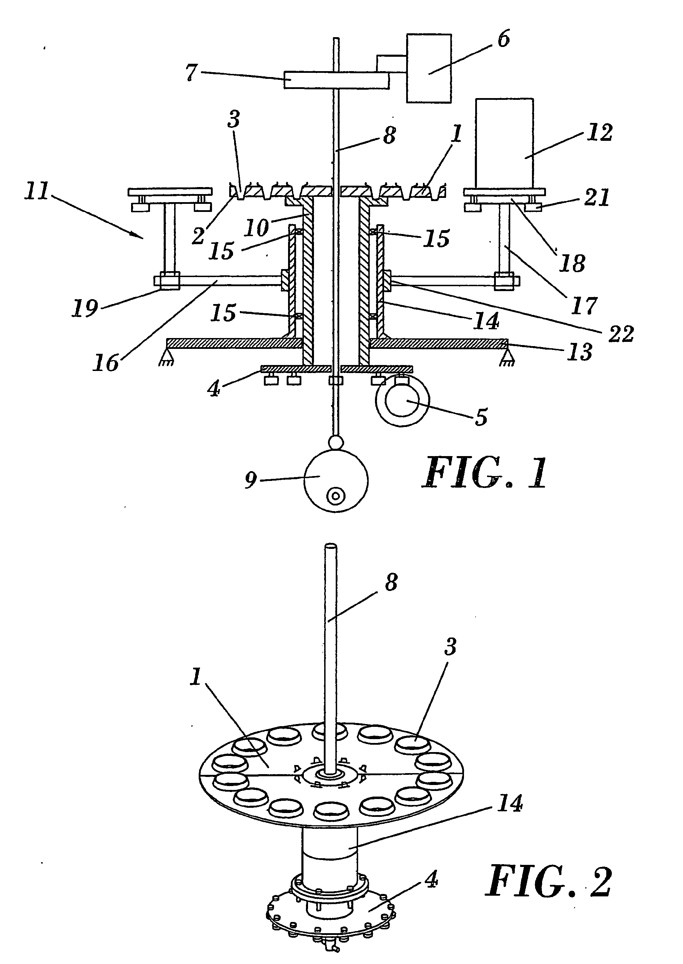

As may be observed in figure 1, the rotary machine incorporates an upper disc (1) endowed with compartments (2) into which the containers (3) are inserted; this is linked to a lower disc (4) which rotates intermittently due to the action of a transmission mechanism (5), bringing about the rotary movement and halting of the containers (3) in correspondence with the different dispensing or other heads (6), mounted on a platform (7) associated in turn with a vertical shaft (8) endowed with vertical movement due to the action of a cam (9), wherefrom the containers (3) are filled and processed.

In said figure 1 it may likewise be seen that the upper disc (1) and the lower disc (4) are linked together by means of an internal cylinder (10) which rotates with regard to a fixed external support (11) and whereon the accessories (12) of the components or substances to be dispensed rest; the fixed external support (11) in turn rests on a baseplate (13).

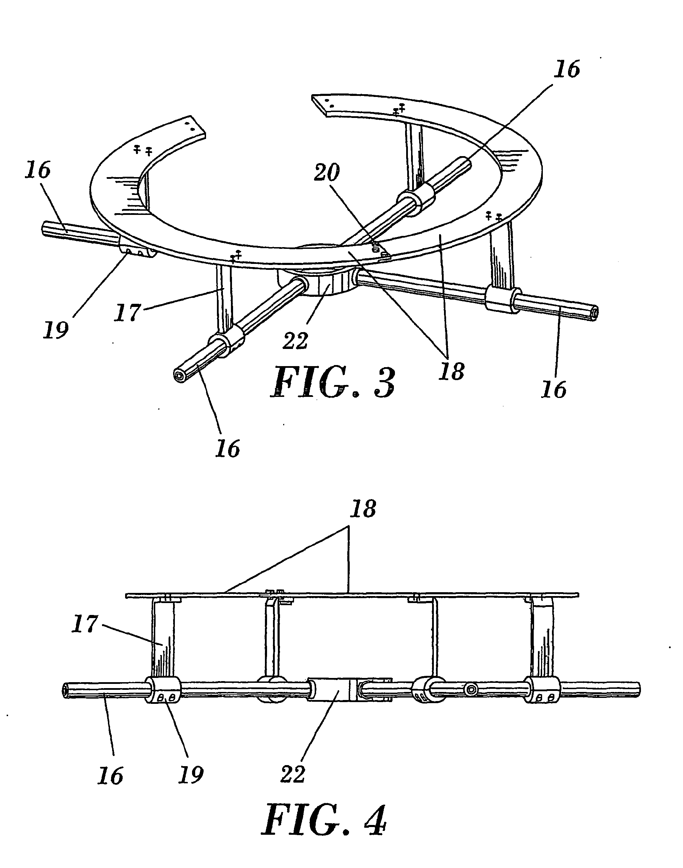

As may be observed in figure 1, the fixed external support (11) is comprised of: an external cylinder (14) in relation to which the internal cylinder (10) rotates with the intervention of roller bearings (15), and radial arms (16) which may likewise be seen in figures 3 and 4, which project from a ring (22) which surrounds the external cylinder (14), and whereon vertical supports (17) are assembled, these being linked to an upper crown (18) located around the upper disc (1) and whereon the different accessories (12) are attached.

The crown (18) is formed by at least two sectors associated with their corresponding vertical supports (17) which feature clamps (19), which allow their positional adjustment with regard to the radial arms (16), in order to control the proximity or remoteness of the sectors of the crown (18) with regard to the upper disc (1), these featuring fixing means (20) which link both sectors of the crown (18).

As may be observed in figure 1, fasteners (21) are arranged on the crown (18); these hold the different accessories (12) and permit their circumferential arrangement as desired in an easy, quick manner, with no limitations regarding position, as is the case with the more habitual construction systems.

## Claims

1. A rotary machine for the filling of containers for ice creams and other substances, which incorporates an upper disc (1) endowed with compartments (2) into which the containers (3) are deposited; being said upper disc (1) linked to a lower disc (4) which rotates intermittently due to the action of a transmission mechanism (5), bringing about the rotary movement and halting of the containers (3) in correspondence with different dispensing heads (6), mounted on a platform (7) associated in turn with a vertical shaft (8) endowed with vertical movement due to the action of a cam (9), wherefrom the containers (3) are filled and processed, **characterised in that** the upper disc (1 ) and the lower disc (4) are linked together by means of an internal cylinder (10) which rotates with regard to a fixed external support (11) and whereon accessories (12) which dispense the components and substances rest; the fixed external support (11 ) in turn rests on a baseplate (13).

2. A rotary machine for the filling of containers for ice creams and other substances according to claim 1, **characterised in that** the fixed external support (11) is comprised of: an external cylinder (14) in relation with which the internal cylinder (10) rotates with the intervention of roller bearings (15), and radial arms (16) which project from a ring (22) which surrounds the external cylinder (14), and whereon vertical supports (17) are assembled, these being linked to an upper crown (18) located around the upper disc (1) and whereon the accessories (12) are attached.

3. A rotary machine for the filling of containers for ice creams and other substances according to claim 2, **characterised in that** the upper crown (18) is formed by at least two sectors associated with the vertical supports (17) which feature clamps (19) which allow their positional adjustment with regard to the radial arms (16) in order to control the proximity or remoteness of the sectors of the crown (18) with regard to the upper disc (1), these featuring fixing means (20) which link both sectors of the crown (18).

4. A rotary machine for the filling of containers for ice creams and other substances according to the preceding claims, **characterised in that** on the crown (18) there are arranged fasteners (21) which hold the accessories (12).

## Patentansprüche

1. Rotationsmaschine zum Befüllen von Behältern für Speiseeis und andere Substanzen, welche eine mit Fächern (2) ausgestattete obere Scheibe (1) umfasst, in denen die Behälter (3) angeordnet werden; wobei die obere Scheibe (1) mit einer unteren Scheibe (4) verbunden ist, welche aufgrund der Betätigung eines Übertragungsmechanismus (5) intermittierend rotiert, wodurch die Rotationsbewegung bewirkt wird und die Behälter (3) mit verschiedenen Abgabeköpfen (6) korrespondierend gehalten werden, welche auf einer Plattform (7) angebracht sind, die wiederum mit einer vertikalen Welle (8) verbunden ist und aufgrund der Betätigung einer Nocke (9) mit vertikaler Bewegung ausgestattet ist, von wo aus die Behälter (3) befüllt und behandelt werden, **dadurch gekennzeichnet, dass** die obere Scheibe (1) und die untere Scheibe (4) mittels eines internen Zylinders (10) miteinander verbunden sind, der gegenüber einer festen externen Abstützung (11) rotiert, und auf welcher Zubehörteile (12) ruhen, welche die Komponenten und Substanzen abgeben; wobei die feste externe Abstützung (11) wiederum auf einer Basisplatte (13) ruht.

2. Rotationsmaschine zum Befüllen von Behältern für Speiseeis und andere Substanzen nach Anspruch 1, **dadurch gekennzeichnet, dass** die feste externe Abstützung (11) besteht aus: einem externen Zylinder (14), gegenüber werden der interne Zylinder (10) unter der Einwirkung von Wälzlagern (15) rotiert, und radialen Armen (16), die von einem Ring (22) vorstehen, welcher den externen Zylinder (14) umgibt, und auf welchen vertikale Abstützungen (17) montiert sind, wobei diese mit einer oberen Krone (18) verbunden sind, welche um die obere Scheibe (1) herum angeordnet ist und auf welcher die Zubehörteile (12) angebracht sind.

3. Rotationsmaschine zum Befüllen von Behältern für Speiseeis und andere Substanzen nach Anspruch 2, **dadurch gekennzeichnet, dass** die obere Krone (18) durch wenigstens zwei Abschnitte gebildet ist, welche den vertikalen Abstützungen (17) zugeordnet sind, die Klemmen (19) aufweisen, welche ihre positionelle Einstellung gegenüber den radialen Armen (16) erlauben, um die Nähe oder Ferne der Abschnitte der Krone (18) gegenüber der oberen Scheibe (1) zu steuern, wobei diese Fixiermittel (20) aufweisen, welche beide Abschnitte der Krone (18) verbinden.

4. Rotationsmaschine zum Befüllen von Behältern für Speiseeis und andere Substanzen nach einem der vorstehenden Ansprüche, **dadurch gekennzeichnet, dass** auf der Krone (18) Befestigungsmittel (21) angeordnet sind, welche die Zubehörteile (12) halten.

## Revendications

1. Machine rotative pour le remplissage de contenants de crèmes glacées et d'autres substances, qui comprend un disque supérieur (1) doté de compartiments (2) dans lesquels les contenants (3) sont déposées ; ledit disque supérieur (1) étant lié à un disque inférieur (4) qui tourne de façon intermittente en raison de l'action d'un mécanisme de transmission (5), provoquant le mouvement rotatif et l'arrêt des contenants (3) en correspondance avec différentes têtes de distribution (6), monté sur une plate-forme (7) associée elle-même à un arbre vertical (8) doté d'un mouvement vertical en raison de l'action d'une came (9), d'où les contenants (3) sont remplis et traités, **caractérisée en ce que** le disque supérieur (1) et le disque inférieur (4) sont liés ensemble au moyen d'un cylindre interne (10) qui tourne en regard d'un support externe fixe (11) et sur lequel des accessoires (12) qui distribuent les composants et les substances reposent ; le support externe fixe (11) lui-même repose sur une plaque de base (13).

2. Machine rotative pour le remplissage de contenants de crèmes glacées et d'autres substances selon la revendication 1, **caractérisée en ce que** le support externe fixe (11) est composé : d'un cylindre externe (14) par rapport auquel le cylindre interne (10) tourne avec l'intervention de roulements à rouleaux (15), et de bras radiaux (16) qui sont en saillie depuis un anneau (22) qui entoure le cylindre externe (14), et sur lequel des supports verticaux (17) sont assemblées, ceux-ci étant liés à une couronne supérieure (18) située vautour du disque supérieur (1) et sur laquelle les accessoires (12) sont attachés.

3. Machine rotative pour le remplissage de contenants de crèmes glacées et d'autres substances selon la revendication 2, **caractérisée en ce que** la couronne supérieure (18) est formée par au moins deux secteurs associés aux supports verticaux (17) qui présentent des colliers de serrage (19) qui permettent leur ajustement de position en regard des bras radiaux (16) afin de commandeur la proximité ou l'éloignement des secteurs de la couronne (18) en regard du disque supérieur (1), ceux-ci présentant des moyens de fixation (20) qui lient les deux secteurs de la couronne (18).

4. Machine rotative pour le remplissage de contenants de crèmes glacées et d'autres substances selon les revendications précédentes, **caractérisée en ce que** sur la couronne (18), sont agencées des fixations (21) qui supportent les accessoires (12).
